(19) **Europäisches Patentamt / European Patent Office / Office européen des brevets**

(11) **EP 1 468 565 B1**

(12) **FASCICULE DE BREVET EUROPEEN**

(45) Date de publication et mention
de la délivrance du brevet:
**22.11.2017 Bulletin 2017/47**

(21) Numéro de dépôt: **02804931.0**

(22) Date de dépôt: **17.12.2002**

(51) Int Cl.:
***H04N 19/00*** (2014.01)

(86) Numéro de dépôt international:
**PCT/FR2002/004377**

(87) Numéro de publication internationale:
**WO 2003/053065 (26.06.2003 Gazette 2003/26)**

(54) **PROCEDE ET DISPOSITIF DE COMPRESSION DE DONNEES VIDEO CODEES PAR PAQUETS VIDEO**

VERFAHREN UND GERÄT FÜR DIE VIDEOPAKETKOMPRIMIERUNG VON VIDEODATEN

METHOD AND DEVICE FOR COMPRESSING VIDEO-PACKET CODED VIDEO DATA

(84) Etats contractants désignés:
**DE FR GB IT**

(30) Priorité: **19.12.2001 FR 0116467**

(43) Date de publication de la demande:
**20.10.2004 Bulletin 2004/43**

(73) Titulaire: **Thomson Licensing DTV
92130 Issy-les-Moulineaux (FR)**

(72) Inventeurs:
• **FRANCOIS, Edouard
F-35890 Bourg-des-Comptes (FR)**
• **THOREAU, Dominique
F-35510 Cesson-Sévigné (FR)**
• **KYPREOS, Jean
F-35830 Betton (FR)**
• **GUILLOTEL, Philippe
F-35770 Vern-sur-Seiche (FR)**
• **BORDES, Philippe
F-35890 Laille (FR)**

(74) Mandataire: **Labelle, Lilian et al
TECHNICOLOR
1-5, rue Jeanne d'Arc
92130 Issy-les-Moulineaux (FR)**

(56) Documents cités:
**EP-A- 0 820 198     US-A- 5 991 445**

• **GISLE BJÖNTEGAARD ET AL: "H.26L TML 8 Reflecting Decisions of Porto Seguro", 14. VCEG MEETING; 24-9-2001 - 27-9-2001; SANTA BARBARA, CALIFORNIA, US; (VIDEO CODING EXPERTS GROUP OF ITU-T SG.16),, no. VCEG-N10, 20 September 2001 (2001-09-20), XP030003263,**

**Description**

L'invention concerne un procédé et dispositif de compression de données vidéo codées par paquets vidéo. Elle se situe dans le domaine de la compression vidéo mettant en oeuvre des techniques de robustesse aux erreurs et se basant sur l'utilisation de paquets vidéo. En particulier, des applications peuvent être envisagées dans le contexte des normes H.263, MPEG-2 et MPEG-4 qui intègrent de tels outils.

Les paquets vidéo consistent en la génération, lors du codage de chaque image de la vidéo, de données binaires indépendantes spatialement les unes des autres. Le train binaire d'une image consiste en plusieurs paquets, isolés les uns des autres par des marqueurs de resynchronisation. Chaque paquet peut être repéré par le marqueur de synchronisation qui le précède. Il peut être décodé sans connaître les données des paquets voisins. Cet outil assure plus de robustesse au décodage en cas de perte de paquets puisque ces pertes n'entraînent pas de propagation spatiale d'erreurs.

Le coût de compression des données vidéo est généralement fonction de la qualité de l'image souhaitée à la réception. Cette relation est connue et dépend principalement de la valeur du pas de quantification des coefficients OCT. Classiquement, la compression est améliorée par la mise en oeuvre de stratégies de codage efficaces exploitant toutes les options proposées par le schéma de codage. Ces stratégies concernent essentiellement les deux points suivants:

- choix des modes de codage image, macrobloc et bloc, assurant un compromis satisfaisant entre qualité de codage et coût de codage dans ces modes;
- pour les images prédites temporellement, choix des vecteurs de mouvement assurant un compromis satisfaisant entre qualité de la prédiction temporelle et coût de codage des vecteurs.

Le document (GISLE BJONTEGAARD ET AL: "H.26L TML 8 Reflecting Decisions of Porto Seguro",14. VCEG MEETING; 24-9-2001 - 27-9-2001 ; SANTA BARBARA, CALIFORNIA, US; (VIDEO CODING EXPERTS GROUP OF ITU-T SG.16), no. VCEG-N10, 20 septembre 2001 (2001-09-20), XP030003263) décrit un exemple de méthode de codage qui inclut un mode « skip » dans lequel aucune information relative à un macrobloc n'est transmise.

Bien que ces méthodes de codage, en général définies dans les normes, soient très efficaces, il est intéressant de mettre en oeuvre des moyens supplémentaires de réduction de coût de codage, les coûts de transmission ou de bande passante restant un problème majeur. Il s'agit en fait de trouver un compromis entre les méthodes classiques de compression telles qu'augmentation du pas de quantification et des méthodes nouvelles, pour obtenir un meilleur rapport qualité de l'image / coût de codage.

L'invention a pour but de pallier les inconvénients précités.

Elle a pour objet un procédé de compression de données vidéo, les données comprimées étant destinées à être décodées avec mise en oeuvre d'un algorithme de masquage d'erreurs, comportant une étape de codage des données vidéo fournissant un train binaire de données agencées en paquets, caractérisé en ce qu'il comporte également :

- une étape de réduction du train binaire consistant en la suppression de un ou plusieurs paquets vidéo dans le train binaire pour fournir un train binaire réduit,
- une étape de mise en oeuvre d'un algorithme de masquage d'erreur sur le train binaire réduit pour calculer une image décodée locale dégradée corrigée qui est l'image reconstruite à partir du train binaire réduit et de l'algorithme de masquage,
- une étape de validation pour valider ou pas la réduction du train binaire en fonction de la qualité de l'image décodée locale dégradée corrigée,
- une étape de sélection du train binaire réduit ou du train binaire, selon qu'il y a ou pas validation.

Un mode de réalisation particulier, le procédé exploitant la prédiction temporelle à partir d'une image précédente appelée image de référence, consiste en une étape supplémentaire de mémorisation de l'image décodée locale dégradée corrigée pour être exploitée comme image de référence lors du codage d'une image suivante.

Un mode de réalisation particulier consiste en ce que l'algorithme de masquage pour la compression des données est le même que celui utilisé pour le décodage des données comprimées.

Un mode de réalisation particulier calcule la qualité de l'image à partir du rapport signal à bruit ou PSNR de cette image relativement à l'image source.

Selon un autre mode de réalisation, la qualité de la décodée locale dégradée corrigée est comparée à la qualité de la décodée locale lors de l'étape de validation.

Selon un autre mode de réalisation, le choix d'un paquet à retirer du flux de données est effectué en fonction de la qualité de l'image décodée locale corrigée obtenue à partir du train binaire réduit.

Selon un autre mode de réalisation, la sélection des données du train binaire relatives à une image se fait par itérations successives des étapes de réduction, validation et sélection, paquet par paquet ou groupe de paquets par groupe de paquets, la réduction du train binaire et sa validation étant effectuée sur le train binaire sélectionné à l'itération précédente.

L'invention concerne aussi un codeur de données vidéo, les données codées étant destinées à être décodées avec mise en oeuvre d'un algorithme de masquage d'erreurs, comportant un circuit de codage des données vidéo fournissant un train binaire de données agencées en paquets, caractérisé en ce qu'il comporte également :

- un circuit de réduction du train binaire réalisant la suppression de un ou plusieurs paquets vidéo,
- un circuit de mise en oeuvre d'un algorithme de masquage d'erreur sur le train binaire réduit pour calculer une image décodée locale dégradée corrigée qui est l'image reconstruite à partir du train binaire réduit,
- un circuit de validation de la réduction du train binaire en fonction de la qualité de la décodée locale dégradée corrigée.
- un circuit de sélection du train binaire réduit ou du train binaire, selon qu'il y a ou pas validation.

L'invention concerne également un système de codage-décodage comprenant le codeur précédent et un décodeur, caractérisé en ce que le codeur met en oeuvre le même algorithme de masquage d'erreur que celui exploité par le décodeur.

L'approche proposée dans l'invention vise à réduire le coût de compression dans le cas où le codage par paquets vidéo est exploité. Elle permet de réduire le coût de codage en dégradant dans une moindre mesure la qualité de l'image. Pour ce faire, les stratégies de masquage d'erreur mises en oeuvre au décodeur sont prises en compte pour améliorer la compression au niveau du codeur: on évite de générer les données qui peuvent être efficacement reconstruites au décodeur ou bien on retire les paquets vidéo qui pourront être reconstruits de façon satisfaisante au décodeur en exploitant ces algorithmes de masquage d'erreur. Cette solution est donc particulièrement efficace, en termes de qualité, si le codeur connaît et adopte les mêmes stratégies de masquage d'erreur que le décodeur. Un tel décodeur "compatible" sera alors capable de reconstruire les données manquantes exactement de la même facon que procéda le codeur, et obtiendra donc en sortie une image décodée identique à celle que génère le codeur. Un décodeur "non compatible", exploitant un autre algorithme de masquage, obtiendra une image un peu différente et une dérive pourra apparaître dans le temps en cas de mise en oeuvre de prédiction temporelle dans le schéma de codage.

D'autres particularités et avantages de l'invention apparaitront clairement dans la description suivante donnée à titre d'exemple non limitatif et faite en regard des figures annexées qui représentent: :

- la figure 1, un synoptique du procédé,
- la figure 2, un découpage en paquets de l'image à coder,
- la figure 3, le retrait d'un paquet vidéo dans l'image codée,
- la figure 4, une image décodée après masquage des erreurs.

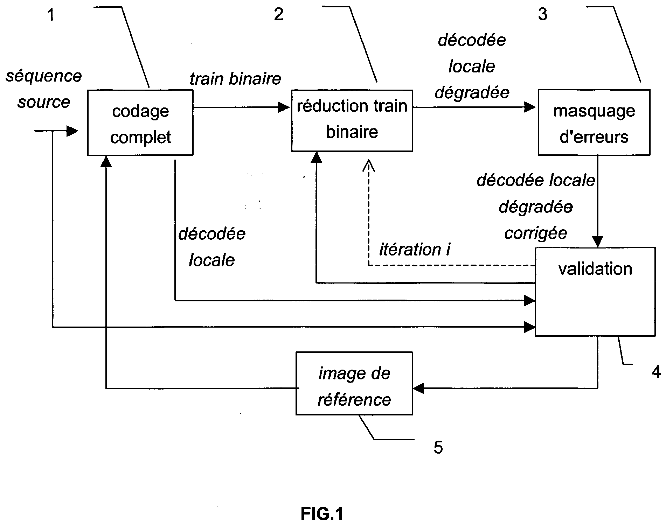

La figure 1 représente un synoptique d'un procédé de codage selon l'invention.

La séquence source qui est transmise à l'entrée du dispositif de codage mettant en oeuvre le procédé est traitée lors d'une première étape 1 qui réalise un codage complet de l'image de manière classique. Cette étape de codage fournit en sa sortie un train binaire codé qui est transmis à l'étape suivante 2, train binaire composé de paquets vidéo définis par des marqueurs de synchronisation. Elle fournit également, vers cette étape 2 et vers une étape 4, l'image décodée locale. Cette image est, de manière connue, reconstruite lors de l'étape de codage 1, à partir des données codées. Elle est exploitée lors du codage, en tant qu'image de référence, pour les modes de codage utilisant la prédiction temporelle, par exemple de type inter-image.

L'étape 2 a pour rôle de supprimer des paquets vidéo dans le flux de données et de calculer l'image correspondante. Cette image, appelée décodée locale dégradée, est obtenue à partir de la décodée locale, de laquelle auront été supprimés les macroblocs correspondant à un ou plusieurs paquets vidéo. Cette étape 2 calcule l'image décodée locale dégradée ainsi que les données codées à transmettre. Ces données sont fonction d'un signal de validation. Il s'agit soit du train binaire reçu de l'étape 1 si la suppression de paquets vidéo n'est pas validée, soit du train binaire réduit si la suppression est validée.

La décodée locale dégradée est ensuite traitée, à l'étape suivante 3, en exploitant un algorithme de masquage d'erreur pour obtenir une image décodée locale dégradée corrigée qui est une image reconstituée à partir de l'image dégradée et de l'algorithme de masquage d'erreur. Ce type d'algorithme a pour but de calculer des données en remplacement de données manquantes ou erronées, par exemple lors d'une transmission, de manière à limiter la dégradation de l'image. Cette étape mémorise également cette image ou plusieurs images précédentes en fonction de l'algorithme de masquage s'il fait appel à la corrélation temporelle inter-images.

L'étape suivante 4 est une étape de validation de la réduction du train binaire. Elle reçoit sur une première entrée l'image décodée dégradée locale corrigée, sur une deuxième entrée l'image décodée locale provenant. de l'étape de codage 1 et enfin, sur une troisième entrée, l'image source de la séquence source. Du résultat de la validation dépend l'image transmise en sortie de cette étape. Si la réduction du train binaire est validée, l'image prise comme image de référence pour le codage de l'image suivante, à l'étape 1, est l'image décodée locale corrigée. En cas d'invalidation, c'est l'image décodée locale calculée à l'étape 1 qui est prise comme image de référence. Un signal de validation est transmis à l'étape 2 pour le choix des données codées à transmettre. En cas de validation, le train binaire résultant est le train binaire réduit (c'est-à-dire privé du paquet vidéo dont on vient de valider le retrait). En cas de non validation, le paquet vidéo n'est pas retiré et le train binaire est conservé intact.

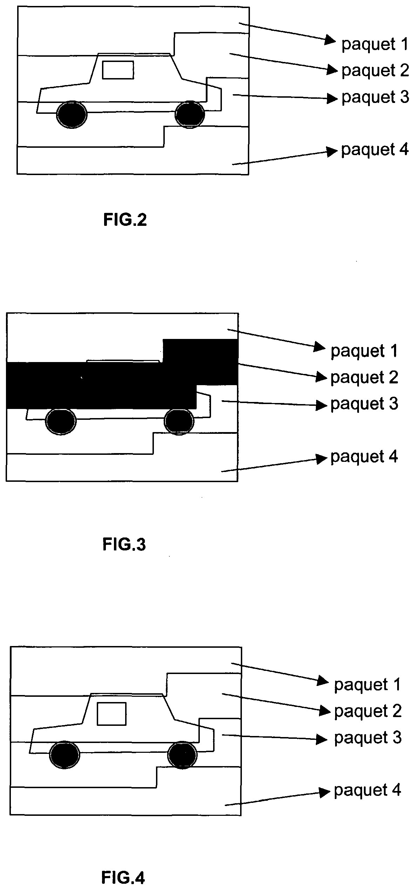

Pour chaque image de la séquence vidéo à coder, un codage "complet" est tout d'abord effectué à l'étape 1. Ce codage fournit un train de données binaires composé de paquets vidéo, qui décrivent complètement l'image. Par exemple, dans le cas où le standard MPEG-4 vidéo est exploité, le paquet no1 décrit les macroblocs 1 à N1. le paquet no2 les macroblocs N1+1 à $N_2$, le paquet no3 les macroblocs $N_2$+1 à $N_3$, etc. Tous les macroblocs de l'image peuvent être reconstruits à partir de ces paquets vidéo. La figure 2 montre un tel découpage de l'image en 4 paquets vidéo.

L'étape 2 de réduction du train binaire vise à réduire la quantité de données binaires issues du codage, c'est à dire à augmenter la compression de données ou réduire le coût de codage. Elle consiste à retirer un ou plusieurs paquets vidéo du flux de données binaires. Le critère de sélection des paquets vidéo à retirer est fortement dépendant des stratégies de masquage d'erreur adoptées. D'une façon générale, les algorithmes de masquage d'erreur qui apportent le plus d'efficacité exploitent essentiellement le masquage temporel, qui consiste à rechercher l'information manquante dans les images précédentes, dans le sens du mouvement. Ainsi, cette étape sélectionne en priorité les paquets vidéo dont les données sont essentiellement codées en mode INTER, avec un résidu de prédiction faible. En reprenant l'exemple de la figure 2, la figure 3 illustre le résultat du retrait d'un paquet vidéo sur l'image décodée. La zone noire correspond aux données perdues. L'image décodée locale dégradée est construite à partir de l'image décodée locale reçue, de laquelle sont supprimés les blocs correspondant à un ou plusieurs paquets.

L'étape suivante 3 met en oeuvre un algorithme de masquage d'erreurs. Les paquets vidéo qui ont été retirés du train binaire vont générer au décodeur des erreurs, correspondant en fait à des zones de l'image pour lesquelles on ne dispose plus d'informations à décoder. Le décodeur va donc utiliser des algorithmes de masquage d'erreurs pour combler ces zones vides. L'approche proposée consiste à appliquer les mêmes algorithmes au niveau du codeur sur les zones correspondant aux paquets vidéo préalablement retirés. La figure 4 montre l'effet du masquage sur l'exemple de la voiture. Si le masquage reconstitue le signal manquant, il le fait néanmoins avec des erreurs. Les dimensions de la fenêtre montrent par exemple que le masquage n'est pas parfait.

L'étape 4 a pour but de valider la réduction du train binaire effectuée. Il s'agit de vérifier que le retrait d'un ou plusieurs paquets vidéo, suivi d'un masquage des erreurs générées, ne provoque pas une dégradation trop importante de l'image résultante par rapport à l'image issue du codage complet. Le traitement consiste donc à comparer la qualité de l'image issue du codage complet, dénommée décodée locale ou image reconstruite à celle de l'image issue de la réduction du train binaire et du masquage d'erreur, dénommée décodée locale dégradée corrigée ou image corrigée, en utilisant comme référence l'image source. Une mesure de qualité peut être, de tacon classique, le rapport signal à bruit ou PSNR, acronyme de l'expression anglaise Peak Signal to Noise Ratio.

Le test de décision est par exemple :

Si

$$\text{Si} \quad \text{PSNR(image corrigée)} > \text{PSNR(image reconstruite)} - À$$

alors la réduction est validée, et l'on retire effectivement du train binaire les paquets vidéo sélectionnés.

À est un seuil qui peut dépendre de l'image source. Il est par exemple fonction de la complexité des zones correspondant aux paquets retirés et représente la tolérance sur la dégradation de l'image.

Le PSNR d'une image 1 est défini par la relation :

$$PSNR = -10 Log \left( \sum_{i,j=1,l}^{i,j=1,c} (I\ (i,j) - I_{src}(i,j))^2 \right) / l.c$$

où i, j sont les coordonnées du pixel dans l'image I, *l* et *c* correspondent au nombre de lignes et de colonnes des pixels dans l'image I, I(i, j) correspond à la valeur de luminance du pixel de coordonnées (i, j) dans l'image I et $I_{src}(i, j)$ correspond à la valeur de luminance du pixel de coordonnées (i, j) dans l'image source.:

La décision peut aussi intégrer des mesures de cohérence temporelle, visant à limiter les fluctuations temporelles et à éviter qu'un même ensemble de macroblocs soit retiré sur plusieurs images successives, ce qui pourrait générer une dégradation croissante de la qualité des images résultantes.

Selon la décision prise, c'est l'image reconstruite ou l'image corrigée qui servira d'image de référence pour le codage des prochaines images de la séquence vidéo, dans le cas d'un codage prédictif temporel. On évite ainsi une dérive au niveau du décodeur lors de la prédiction temporelle. Le décodeur, utilisant les mêmes stratégies de masquage d'erreurs que le codeur, disposera de la même image de référence que le codeur.

Une variante de l'invention consiste à déterminer non plus si l'on retire ou pas un paquet vidéo mais quels sont les paquets que l'on souhaite retirer du flux binaire, en fonction des erreurs générées dans l'image corrigée. Un premier paquet est retiré du flux de données et un test de qualité de l'image décodée locale dégradée corrigée correspondante est effectué. Un deuxième paquet est retiré à la place du premier et un nouveau test est effectué. Ainsi de suite pour l'ensemble des paquets relatifs à une image. Lors d'une deuxième passe, le paquet pour lequel l'image décodée locale dégradée corrigée est de meilleure qualité est effectivement retiré du flux de données.

Ces mêmes tests sur la qualité de l'image décodée locale dégradée corrigée peuvent également être effectués pour décider du nombre de paquets d'une image qu'il est possible de retirer, en calculant l'image décodée locale dégradée corrigée après retrait successif de un, deux, trois paquets... jusqu'à ce que la qualité de cette image ne convienne plus. L'ordre de choix des paquets, pour le test, peut être fonction de la qualité de l'image dégradée corrigée obtenue lors du retrait unitaire de chaque paquet, comme indiqué précédemment.

Ces variantes sont symbolisées sur la figure 1 par la ligne en pointillés reliant l'étape 4 à l'étape 2. Une validation, c'est à dire un test de qualité est effectué après chaque retrait de paquet du flux binaire.

Les applications de l'invention concernent, entre autres, la compression de données pour la transmission ou le stockage d'images numériques par paquets.

## Revendications

1. Procédé de compression de données vidéo, les données comprimées étant destinées à être décodées avec mise en oeuvre d'un algorithme de masquage d'erreurs, comportant une étape de codage des données vidéo (1) fournissant un train binaire de données agencées en paquets, **caractérisé en ce qu'**il comporte également :

   - une étape de réduction du train binaire (2) consistant en la suppression de un ou plusieurs paquets vidéo dans le train binaire pour fournir un train binaire réduit,
   - une étape de mise en oeuvre d'un algorithme de masquage d'erreur sur le train binaire réduit (3) pour calculer une image décodée locale dégradée corrigée qui est l'image reconstruite à partir du train binaire réduit et de l'algorithme de masquage,
   - une étape de validation (4) pour valider ou pas la réduction du train binaire en fonction de la qualité de l'image décodée locale dégradée corrigée,
   - une étape de sélection (2) du train binaire réduit ou du train binaire, selon qu'il y a ou pas validation.

2. Procédé selon la revendication 1 exploitant la prédiction temporelle à partir d'une image précédente appelée image de référence, **caractérisé en ce qu'**il comporte une étape supplémentaire de mémorisation (4) de l'image décodée locale dégradée corrigée pour être exploitée comme image de référence (5) lors du codage (1) d'une image suivante.

3. Procédé selon la revendication 1, **caractérisé en ce que** l'algorithme de masquage pour la compression des données est le même que celui utilisé pour le décodage des données comprimées.

4. Procédé selon la revendication 1, **caractérisé en ce que** la qualité de l'image est calculée à partir du rapport signal à bruit ou PSNR de cette image relativement à l'image source.

5. Procédé selon la revendication 1, **caractérisé en ce que**, lors de l'étape de validation (4), la qualité de la décodée locale dégradée corrigée est comparée à la qualité de la décodée locale.

6. Procédé selon la revendication 1, **caractérisé en ce que** le choix (2) d'un paquet à retirer du flux de données est effectué en fonction de la qualité (4) de l'image décodée locale corrigée obtenue à partir du train binaire réduit.

7. Procédé selon la revendication 1, **caractérisé en ce que** la sélection des données du train binaire relatives à une image se fait par itérations successives des étapes de réduction (3), validation (4) et sélection (4); paquet par paquet ou groupe de paquets par groupe de paquets, la réduction du train binaire (3) et sa validation (4) étant effectuée sur le train binaire sélectionné à l'itération précédente.

8. Procédé de codage selon la revendication 1, **caractérisé en ce qu'**il met en oeuvre un codage de type MPEG.

9. Codeur de données vidéo, les données codées étant destinées à être décodées avec mise en oeuvre d'un algorithme de masquage d'erreurs, comportant un circuit de codage des données vidéo (1) fournissant un train binaire de données agencées en paquets, **caractérisé en ce qu'**il comporte également :

   - un circuit de réduction du train binaire (2) réalisant la suppression de un ou plusieurs paquets vidéo,
   - un circuit de mise en oeuvre d'un algorithme de masquage d'erreur sur le train binaire réduit (3) pour calculer une image décodée locale dégradée corrigée qui est l'image reconstruite à partir du train binaire réduit,
   - un circuit de validation (4) de la réduction du train binaire en fonction de la qualité de la décodée locale dégradée corrigée.
   - un circuit de sélection (2) du train binaire réduit ou du train binaire, selon qu'il y a ou pas validation.

10. Système de codage-décodage comprenant un codeur selon la revendication 9 et un décodeur, **caractérisé en ce que** le codeur met en oeuvre le même algorithme de masquage d'erreur que celui exploité par le décodeur.


**Patentansprüche**

1. Verfahren zur Komprimierung von Videodaten, wobei die komprimierten Daten dazu bestimmt sind, unter Anwendung eines Algorithmus zur Verschleierung von Fehlern decodiert zu werden, das einen Schritt zur Codierung der Videodaten (1) umfasst, mit Lieferung eines Bitstroms von Daten, die in Paketen angeordnet sind, **dadurch gekennzeichnet, dass** es ebenfalls umfasst:

   - einen Schritt zur Reduzierung des Bitstroms (2), bestehend im Entfernen eines oder mehrerer Videopakete aus dem Bitstrom, um einen reduzierten Bitstrom zu liefern,
   - einen Schritt zur Anwendung eines Algorithmus zur Verschleierung von Fehlern auf dem reduzierten Bitstrom (3), um ein korrigiertes verschlechtertes lokales decodiertes Bild zu berechnen, welches das aus dem reduzierten Bitstrom und dem Verschleierungsalgorithmus rekonstruierte Bild ist,
   - einen Schritt zur Validierung (4), um die Reduzierung des Bitstroms in Abhängigkeit von der Qualität des korrigierten verschlechterten lokalen decodierten Bildes zu validieren oder nicht,
   - einen Schritt zur Auswahl (2) des reduzierten Bitstroms oder des Bitstroms, je nachdem, ob eine Validierung stattfindet oder nicht.

2. Verfahren nach Anspruch 1 unter Nutzung der zeitlichen Vorhersage anhand eines vorhergehenden Bildes, das als Referenzbild bezeichnet wird, **dadurch gekennzeichnet, dass** es einen zusätzlichen Schritt zur Speicherung (4) des korrigierten verschlechterten lokalen decodierten Bildes umfasst, um als Referenzbild (5) bei der Codierung (1) eines Folgebildes genutzt zu werden.

3. Verfahren nach Anspruch 1, **dadurch gekennzeichnet, dass** der Verschleierungsalgorithmus für die Komprimierung der Daten derselbe ist wie jener, der für die Decodierung der komprimierten Daten verwendet wird.

4. Verfahren nach Anspruch 1, **dadurch gekennzeichnet, dass** die Qualität des Bildes anhand des Signal-Rausch-Verhältnisses oder PSNR dieses Bildes bezogen auf das Quellbild berechnet wird.

5. Verfahren nach Anspruch 1, **dadurch gekennzeichnet, dass** bei dem Validierungsschritt (4) die Qualität des korrigierten verschlechterten lokalen decodierten *[Bildes]* mit der Qualität des lokalen decodierten *[Bildes]* verglichen wird.

6. Verfahren nach Anspruch 1, **dadurch gekennzeichnet, dass** die Wahl (2) eines aus dem Datenfluss zu entfernenden Pakets in Abhängigkeit von der Qualität (4) des korrigierten lokalen decodierten Bildes, das aus dem reduzierten Bitstrom erhalten wird, erfolgt.

7. Verfahren nach Anspruch 1, **dadurch gekennzeichnet, dass** die Auswahl der Daten des Bitstroms, die sich auf ein Bild beziehen, durch aufeinanderfolgende Iterationen der Schritte zur Reduzierung (3), zur Validierung (4) und zur Auswahl (4) vorgenommen wird, paketweise oder paketgruppenweise, wobei die Reduzierung des Bitstroms (3) und seine Validierung (4) auf dem Bitstrom erfolgt, der bei der vorhergehenden Iteration ausgewählt wurde.

8. Verfahren zur Codierung nach Anspruch 1, **dadurch gekennzeichnet, dass** es eine Codierung vom Typ MPEG anwendet.

9. Codierer von Videodaten, wobei die codierten Daten dazu bestimmt sind, unter Anwendung eines Algorithmus zur Verschleierung von Fehlern decodiert zu werden, bestehend aus einem Schaltkreis zur Codierung der Videodaten (1), mit Lieferung eines Bitstroms von Daten, die in Paketen angeordnet sind, **dadurch gekennzeichnet, dass** er ebenfalls besteht aus:

- einem Schaltkreis zur Reduzierung des Bitstroms (2), der das Entfernen eines oder mehrerer Videopakete vornimmt,
- einem Schaltkreis zur Anwendung eines Verschleierungsalgorithmus auf den reduzierten Bitstrom (3), um ein korrigiertes verschlechtertes lokales decodiertes Bild zu berechnen, welches das aus dem reduzierten Bitstrom rekonstruierte Bild ist,
- einem Schaltkreis zur Validierung (4) der Reduzierung des Bitstroms in Abhängigkeit von der Qualität des korrigierten verschlechterten lokalen decodierten *[Bildes]*.
- einem Schaltkreis zur Auswahl (2) des reduzierten Bitstroms oder des Bitstroms, je nachdem, ob eine Validierung stattfindet oder nicht.

10. System zur Codierung-Decodierung, das einen Codierer nach Anspruch 9 und einen Decodierer umfasst, **dadurch gekennzeichnet, dass** der Codierer denselben Verschleierungsalgorithmus anwendet wie jenen, der vom Decodierer genutzt wird.

## Claims

1. Video data compression method, the compressed data being intended to be decoded with use of an error masking algorithm, comprising a video data coding step (1) providing a data bitstream arranged in packets, **characterised in that** it also comprises:

- a bitstream reduction step (2) consisting in the removal of one or more video packets from the bitstream to supply a reduced bitstream,
- an implementation step of an error masking algorithm on the reduced bitstream (3) to calculate a corrected degraded local decoded image that is the image reconstructed from the reduced bitstream and the masking algorithm,
- a validation step (4) to validate or not the reduction of the bitstream according to the quality of the corrected degraded local decoded image,
- a selection step (2) of the reduced bitstream or the bitstream, according to whether or not there is validation.

2. Method according to claim 1 using temporal prediction from a previous image called reference image, **characterised in that** it comprises an additional memorisation step (4) of the corrected degraded local decoded image to be used as reference image (5) during the coding (1) of a next image.

3. Method according to claim 1, **characterised in that** the masking algorithm for the data compression is the same as the one used for the decoding of the compressed data.

4. Method according to claim 1, **characterised in that** the quality of the image is calculated from the signal to noise ratio or PSNR of this image in relation to the source image.

5. Method according to claim 1, **characterised in that**, during the validation step (4), the quality of the corrected degraded local decoded is compared with the quality of the local decoded.

6. Method according to claim 1, **characterised in that** the choice (2) of a packet to remove from the data stream is made according to the quality (4) of the corrected local decoded image obtained from the reduced bitstream.

7. Method according to claim 1, **characterised in that** the selection of the data of the bitstream relating to an image is done by successive iterations of the steps of reduction (3), validation (4) and selection (4), packet by packet or group of packets by group of packets, the bitstream reduction (3) and its validation (4) being performed on the bitstream selected in the previous iteration.

8. Coding method according to claim 1, **characterised in that** it implements an MPEG type coding.

9. Video data coder, the coded data being intended to be decoded with use of an error masking algorithm, comprising a video data coding circuit (1) providing a data bitstream arranged in packets, **characterised in that** it also comprises:

   - a bitstream reduction circuit (2) performing the removal of one or more video packets,
   - an implementation circuit of an error masking algorithm on the reduced bitstream (3) to calculate a corrected degraded local decoded image that is the image reconstructed from the reduced bitstream,
   - a validation circuit (4) for the reduction of the bitstream according to the quality of the corrected degraded local decoded,
   - a selection circuit (2) of the reduced bitstream or the bitstream, according to whether or not there is validation.

10. Coding-decoding system comprising a coder according to claim 9 and a decoder, **characterised in that** the coder uses the same error masking algorithm as the one used by the decoder.

FIG.1

**FIG.2**

**FIG.3**

**FIG.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- H.26L TML 8 Reflecting Decisions of Porto Seguro. **GISLE BJONTEGAARD et al.** 14. VCEG MEETING; 24-9-2001 - 27-9-2001 ; SANTA BARBARA. VIDEO CODING EXPERTS GROUP OF ITU-T SG.16, 20 Septembre 2001